(19) Europäisches Patentamt
European Patent Office
Office européen des brevets

(11) **EP 1 696 001 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(51) Int Cl.:
*C08L 83/04* (2006.01)          *C08G 77/04* (2006.01)
*C08K 3/00* (2006.01)          *C08K 5/14* (2006.01)

(21) Anmeldenummer: **06003711.6**

(22) Anmeldetag: **23.02.2006**

(54) **Siliconkautschukmassen und daraus erhaltene dauerbelastungsbeständige Siliconelastomere**

Silicon rubbers and fatigue resistant elastomeres derived thereof

Compositions de caoutchouc silicone et élastomères résistants à la fatigue préparés à partir de celles-ci

(84) Benannte Vertragsstaaten:
**BE DE FR GB NL**

(30) Priorität: **24.02.2005 DE 102005008951**

(43) Veröffentlichungstag der Anmeldung:
**30.08.2006 Patentblatt 2006/35**

(73) Patentinhaber: **Wacker Chemie AG**
**81737 München (DE)**

(72) Erfinder:
• **Achenbach, Frank, Dr.**
**84359 Simbach am Inn (DE)**
• **Fehn, Armin, Dr.**
**84561 Mehring (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 542 471          US-A- 5 521 245**

**Beschreibung**

Gegenstand der Erfindung sind Siliconkautschukmassen und daraus erhaltene dauerbelastungsbeständige Siliconelastomere, mit hervorragender Beständigkeit gegenüber dauerhaften dynamisch-mechanischen Belastungen, und deren Verwendung.

Siliconelastomere kommen häufig in Anwendungen zum Einsatz, die mit hohen dynamisch-mechanischen Belastungen verbunden sind. Beispiele hierfür sind Schwingungstilger, Resonanzdämpfer, Auspuff- und Katalysatoraufhängungen sowie Motorlager in Automobilen, Lager für bewegliche Teile im Maschinenbau, Rollerpumpenschläuche im Medizinbereich, Membranen, Ventile und insbesondere die im Elektronikbereich vielfältig verwendeten Schaltmatten/ Tastaturen, auch als keypads bekannt. Für den Funktionserhalt dieser Siliconelastomerteile ist es von besonderer Wichtigkeit, dass sich die mechano-elastischen Eigenschaften auch bei sehr häufiger dynamisch-mechanischer Beanspruchung nicht oder nur geringfügig ändern. Grundsätzlich führt jedoch das wiederholte Durchlaufen dynamisch-mechanischer Belastungszyklen bei allen Elastomeren unvermeidlich zu einer stetig zunehmenden mechanischen Ermüdung, auch als fatigue bekannt, und Schädigung des Materials, was letztlich zum Funktionsverlust des Elastomerteils führt. Die aus herkömmlichen Siliconelastomeren gefertigten keypads können beispielsweise durchaus mehrere Millionen Verformungszyklen bis zum völligen Funktionsverlust überstehen.

Um den gestiegenen Anforderungen an die Servicezeit dynamisch-mechanisch belasteter Elastomerteile gerecht zu werden, wurden zahlreiche Methoden entwickelt, welche gezielt die Beständigkeit gegenüber dynamisch-mechanischer Belastung, die sogenannte Dauerbelastungsbeständigkeit, oder auch als fatigue resistance, durability oder flex life bekannt, erhöhen.

Die Patentschrift US 4,745,144 beschreibt Siliconmassen, denen zum Zweck einer erhöhten Dauerbelastungsbeständigkeit bestimmte phosphororganische Verbindungen zugesetzt werden, wodurch eine nach dem de Mattia Test, gemäß JIS K-6301, bestimmte Dauerbelastungsbeständigkeit von beispielhaft etwa 7 Millionen Deformationszyklen erzielt werden kann. Das Vorhandensein phosphororganischer Verbindungen in Siliconmassen beziehungsweise Siliconelastomeren hat jedoch mehrere Nachteile, wie beispielsweise, dass die Platinkatalysierte Additionsvernetzung inhibiert wird, der Druckverformungsrest höher ausfällt, die Thermostabilität vermindert wird und beim Tempern unerwünschte, teils toxische Spaltprodukte gebildet werden.

EP 0 841 363 A1 offenbart eine Methode zur kontinuierlichen Herstellung von Siliconkautschukmassen. Sie werden aufgrund der Verwendung spezieller Siloxanole, welche die Benetzung des Füllstoffs fördern, durch Platinkatalysierte Additionsreaktion zu Siliconelastomeren mit erhöhter Dauerbelastungsbeständigkeit vernetzt. Die gemäß JIS K-6301 mit dem de Mattia Test bestimmten Dauerbelastungsbeständigkeiten erreichen Werte von bis zu 14 Millionen Deformationszyklen. Nachteilig ist jedoch, dass die Herstellung der verwendeten Siloxanole, die über einen Paladiumkatalysierten Hydrolyseschritt verläuft, relativ aufwendig ist. Zudem werden für die Lagerung derartiger Siloxanole stabilisierende Zusätze erforderlich und die in der Siliconmasse nicht abreagierten Silanolgruppen können zum Viskositätsanstieg während der Lagerung, auch als crepe hardening bekannt, führen.

EP 0 501 380 A2 offenbart, dass durch Zusatz eines Siloxans, welches eine über einen zweiwertigen Kohlenwasserstoffrest an Si gebundene Carbinolgruppe enthält, die mechanische Dauerbelastungsbeständigkeit von Siliconelastomeren erheblich verbessert werden kann. Mit dieser Methode konnten Dauerbelastungsbeständigkeiten von beispielhaft etwa 4 Millionen Belastungszyklen mit dem de Mattia Test, gemäß JIS K-6301, erzielt werden. Ein Nachteil ist die relativ aufwendige Herstellung carbinolfunktioneller Siloxane. Zudem wirken derartige Verbindungen thixotropierend, das heißt, die Fließfähigkeit der Siliconmasse wird erheblich beeinträchtigt. Weiterhin führen die längerkettigen Alkylenspacer im carbinolfunktionellen Siloxan auch zu einer Herabsetzung der Thermostabilität.

In EP 0 497 277 A2 werden vernetzungsfähige Siliconmassen beschrieben, welche ebenfalls einen zusätzlichen Bestandteil enthalten, um die Beständigkeit der daraus hergestellten Siliconelastomere gegenüber repetitiver Deformation zu erhöhen. Bei dem zusätzlichen Bestandteil handelt es sich um ein Organooligosiloxan, welches pro Molekül 2 bis 10 Si-Atome enthält, wobei zumindest eine Si-gebundene Alkenylgruppe und zugleich zumindest zwei Si-gebundene hydrolysierbare Gruppen vorhanden sind. Auf diese Weise werden mit dem de Mattia Test, gemäß JIS K-6301, Dauerbelastungsbeständigkeiten von beispielhaft etwa 4 Millionen Belastungszyklen erzielt. Hydrolysierbare Gruppen enthaltende Additive können jedoch in fließfähigen Siliconmassen einen massiven Viskositätsanstieg verursachen, weshalb diese Methode nur für Festsiliconkautschukmassen geeignet ist.

Allen, dem Stand der Technik entsprechenden, Lösungsansätzen für die Erhöhung der Dauerbelastungsbeständigkeit ist gemeinsam, dass sie auf Zugabe spezieller Additive beruhen. Dies bedingt jedoch vielfältige Nachteile auf die Performance der Siliconelastomere, wie beispielsweise verminderte Thermostabilität und Viskositätsanstieg. Zudem werden die damit erzielbaren Dauerbelastungsbeständigkeiten den gestiegenen Anforderungen an die Servicezeit dynamisch-mechanisch beanspruchter Siliconelastomerteile nicht mehr gerecht.

Ein nahe liegender Lösungsansatz ist, dass sich niedrige Gehalte an Füllstoffen sowie eine hohe Dispergiergüte des Füllstoffs vorteilhaft auf die Dauerbelastungsbeständigkeit auswirken. Des Weiteren geht man davon aus, dass die Servicezeit dynamisch-mechanisch beanspruchter Elastomerteile umso größer ist, je höher die mechanische Festigkeit, wie beispielsweise der Weiterreißwiderstand oder die Reißfestigkeit, des Elastomers ist. Da, wie in G. J. Lake, A. G. Thomas, Proc. R. Soc. London Ser. A, A300, 108-119 (1967) beschrieben, die zum Weiterreißen einer Rissfront erforderliche Energie der Quadratwurzel des mittleren Molekulargewichtes der zwischen zwei Netzknoten befindlichen Polymerkette proportional ist, sollte durch Einstellen einer niedrigen Netzpunktdichte, und somit eines relativ niedrigen Moduls, die Dauerbelastungsbeständigkeit auch eines Siliconelastomers erhöht werden können. In Übereinstimmung damit wird in DE 30 12 777 A1 ausgeführt, dass die Biegelebensdauer einer peristaltischen Pumpe durch Wahl eines Siliconelastomers mit niedrigerem Modul, erhöht werden kann.

EP 0 798 342 A2 beschreibt additionsvernetzbare Siliconkautschukmassen, die sich dadurch auszeichnen, dass die daraus hergestellten Tastaturen, als keyboard pads bezeichnet, ein verbessertes Hystereseverhalten zeigen, das heißt, die betätigte Tastatur schneller und vollständiger in ihre Ausgangslage zurückkehrt. Damit verbunden ist eine ausgeprägtere Response der Tastatur, die der Betätiger der Tastatur als stärkeres Zurückschnappen und als ein das Niederdrücken bestätigendes Knacken, als crispness bezeichnet, wahrnimmt. Das verbesserte Hystereseverhalten wird erzielt durch eine Kombination eines ausschließlich am Kettenende, das heißt $\alpha,\omega$-vinylfunktionellen Polysiloxans mit einem zusätzlich in der Kette 1 bis 5 Mol.-% Vinylgruppen enthaltenden Polysiloxan sowie einer mit einem Gemisch aus Tetramethyldivinyldisilazan und Hexamethyldisilazan behandelten verstärkenden Kieselsäure. Ein direkter Vergleich mit den weiter oben aufgeführten Lösungsansätzen ist nicht möglich, da keine Angaben bezüglich der Dauerbelastungsbeständigkeit gemacht werden. Hinsichtlich der stofflichen Zusammensetzung werden in der EP 0 305 073 A2 ähnliche Siliconkautschukmassen beschrieben. Auch hier werden durch Kombination eines nur am Kettenende vinylfunktionellen Polysiloxans mit einem zusätzlich in der Kette 1 bis 5 Mol.-% Vinylgruppen aufweisenden Polysiloxans verbesserte Werte in der Reißfestigkeit und im Weiterreißwiderstand erzielt.

Das in der Patentanmeldung EP 0 798 342 A2 beschriebene Hystereseverhalten bezieht sich auf das mechanische Rückstellverhalten des Elastomers, das heißt auf die unmittelbar nach Betätigung, also Niederdrücken und Loslassen, eines keypad-artigen Probekörpers feststellbare prozentuale Abnahme in der Höhe des Probekörpers. Die mechanisch unvollständige oder verzögerte Rückkehr in den Ausgangszustand zeigt viskose, dissipative Vorgänge an. Ganz allgemein zeigen alle viskoselastischen Materialien beim Durchlaufen dynamisch-mechanischer Belastungszyklen ein mehr oder minder ausgeprägtes Hystereseverhalten, das bedeutet, die Spannungs-Verformungs-Kurve eines Verformungszyklus schließt eine Fläche ein, die der während des Verformungszyklus pro Volumeneinheit dissipierten Deformationsenergie, der so genannten spezifischen Verlustenergie, entspricht. Die spezifische Verlustenergie stellt folglich ein charakteristisches Maß für die in einem Material bei dynamisch-mechanischer Beanspruchung auftretende innere Reibung dar.

In Anbetracht des oben aufgeführten Standes der Technik ist zu erwarten, dass niedrigmodulige Siliconelastomere mit niedriger spezifischer Verlustenergie die höchsten Dauerbelastungsbeständigkeiten aufweisen. Ein direkter Vergleich des zweiten Lösungsansatzes mit dem ersten kann jedoch nicht durchgeführt werden, da hier keine Bestimmung der Dauerbelastungsbeständigkeit mit dem de Mattia Test, gemäß JIS K-6301, durchgeführt wurde.

Der vorliegenden Erfindung liegt daher die Aufgabe zugrunde, ohne Zusatz von Additiven die Grundbestandteile vernetzungsfähiger Siliconmassen so zu gestalten, dass die daraus erhaltenen Siliconelastomere weit höhere Dauerbelastungsbeständigkeiten erzielen als herkömmliche Siliconelastomere.

Diese Aufgabe wurde durch die erfindungsgemäßen vernetzbaren Siliconkautschukmassen gelöst. Die erfindungsgemäßen vernetzbaren Siliconkautschukmassen, enthalten

(A) 100 Gewichts-Teile mindestens eines Polydiorganosiloxans, das Organosiloxy-Einheiten mit Si-C gebundenen, aliphatisch ungesättigten Gruppen aufweist,

(B) 1 - 90 Gewichts-Teile mindestens eines verstärkenden Füllstoffs der als ein feinteiliger, anorganischer Feststoff mit einer spezifischen Oberfläche von mindestens 30 m$^2$/g vorliegt,

(C) 0,1 - 20 Gewichts-Teile mindestens eines Vernetzers,

(D) 0 - 10 Gewichts-Teile eines beidseitig Vinyldiorganosiloxy-terminierten Polydiorganosiloxans, dessen kettenständige Einheiten frei von aliphatisch ungesättigten Gruppen sind, mit einem mittleren Polymerisationsgrad zwischen 3.000 und 10.000,

(E) 0 - 200 Gewichts-Teile weiterer Bestandteile ausgewählt aus der Gruppe enthalten nicht verstärkende Füllstoffe, Talkum, Quarzmehl, Inhibitoren, Katalysatoren, Weichmacher, Farbpigmente, Stabilisatoren, flammhemmende Zusätze, Haftvermittler, Entformbarkeitsadditive, Mikrohohlkugeln oder ihren Mischungen,

und sind dadurch gekennzeichnet, dass das Polydiorganosiloxan (A)

(a) einen mittleren Polymerisationsgrad zwischen 3.000 und 10.000,

(b) 0,2 bis 20 Mol-% Organosiloxy-Einheiten, enthaltend aliphatisch ungesättigte Gruppen, und

(c) eine segregationsarme Verteilung der Organosiloxy-Einheiten, aufweisend aliphatisch ungesättigte Gruppen, mit der Maßgabe, dass die Blockzahl $R \geq 180 \bullet X_a \bullet (1 - X_a)$, wobei $X_a$ den Molenbruch dieser Organosiloxy-Einheiten bedeutet,

aufweist.

Die erfindungsgemäßen Siliconkautschukmassen enthalten Polydiorganosiloxane (A) mit möglichst hohem Gehalt an kettenständigen Vinylgruppen, ohne Zusatz spezieller Additive oder die Verwendung von im Vinylgehalt beziehungsweise in der Kettenlänge deutlich unterschiedlicher Polyorganosiloxane. Die erfindungsgemäße Erhöhung der Dauerbelastungsbeständigkeit wurde also entgegen den Erwartungen, aus dem Stand der Technik, durch eine hohe Netzpunktdichte, bei gleichzeitig segregationsarmer Vinylgruppenverteilung, erreicht. In einer bevorzugten Ausführungsform wurde durch die zusätzliche Verwendung des verstärkenden Füllstoffes (B), welcher kovalent gebundene, aliphatisch ungesättigte Gruppen enthielt, die Dauerbelastungsbeständigkeit zusätzlich gesteigert.

In einer weiteren bevorzugten Ausführung sind die erfindungsgemäßen, vernetzbaren Siliconkautschukmassen dadurch gekennzeichnet, dass das Polydiorganosiloxan (A) einen Anteil von 0,4 bis 10 Mol-% Organosiloxy-Einheiten, aufweisend aliphatisch ungesättigte Gruppen, enthält.

Das Polyorganosiloxan (A) entspricht der allgemeinen durchschnittlichen Formel (1)

$$R^1{}_a R^2{}_b SiO_{(4-a-b)/2} \qquad (1)$$

wobei

a    eine Zahl zwischen 1,9 und 2,0,

b    eine Zahl zwischen 0,002 und 0,1,

$R^1$   eine OH-Gruppe oder gleich oder verschiedene, monovalente, gegebenenfalls halogensubstituierte oder Heteroatome enthaltende Kohlenwasserstoffreste mit 1 bis 20 Kohlenstoffatomen, frei von aliphatisch ungesättigten Gruppen und

$R^2$   gleich oder verschiedene, monovalente, aliphatisch ungesättigte, gegebenenfalls halogensubstituierte oder Heteroatome enthaltende Kohlenwasserstoffreste mit 1 bis 10 Kohlenstoffatomen und einer Hydrosilylierungsreaktion zugänglich

bedeuten.

Beispiele für $R^1$ sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und/oder mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste $R^1$ sind Methyl-, Phenyl- und 3,3,3-Trifluorpropylrest. Besonders bevorzugter Rest $R^1$ ist der Methylrest.

Beispiele für $R^2$ sind Alkenyl- und/oder Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und/oder Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste $R^2$ sind der Vinyl-, Allyl-und 5-Hexenylrest. Besonders bevorzugter Rest $R^2$ ist der Vinylrest.

Das Polyorganosiloxan (A) zeichnet sich insbesondere durch eine segregationsarme bis segregationsfreie Verteilung der alkenylfunktionellen Organosiloxy-Einheiten aus, das heißt eine Verteilung, in der die alkenylfunktionellen Organosiloxy-Einheiten möglichst gleichmäßig entlang der Polymerkette angeordnet sind. Idealerweise sind die alkenylfunktionellen Organosiloxy-Gruppen äquidistant verteilt. Eine segregationsarme Verteilung entspricht im Idealfall einer statistischen Verteilung der alkenylfunktionellen Organosiloxy-Gruppen. Dabei kommt es statistisch bedingt zum Auftreten einiger weniger benachbarter alkenylfunktioneller Organosiloxy-Einheiten. Ein quantitatives, experimentell bestimmbares Maß für die Verteilungsgüte der alkenylfunktionellen Organosiloxy-Einheiten entlang der Polymerkette ist die Blockzahl R. Sie gibt an wie viele Sequenzen einer Monomereinheit im Mittel auf einen Copolymerstrang bestehend aus 100 Monomereinheiten entfallen. Für die erfindungsgemäße Bestimmung der Verteilung der vernetzungsfähigen alkenylfunktionellen Organosiloxy-Einheiten werden Sequenzen mit ausschließlich alkenylgruppenfreien Organosiloxy-Einheiten als nur eine Sequenz gezählt.

Für eine statistisch zufällige Verteilung der alkenylfunktionellen Organosiloxy-Einheiten kann die Blockzahl R unmittelbar aus dem Molenbruch $X_a$ der alkenylfunktionellen Organosiloxy-Einheiten mit der allgemeinen Gleichung (1) berechnet werden.

$$R_{statistisch} = 200 \bullet X_a \bullet (1 - X_a) \qquad\qquad (1)$$

Die erfindungsgemäßen Polyorganosiloxane (A) weisen einen Gehalt an alkenylfunktionellen Organosiloxy-Einheiten zwischen 0,2 und 20 Mol-% auf. Laut Gleichung (1) ergibt sich für die Blockzahl $R_{statistisch}$ ein Wert zwischen 0,3992 und 32. Durch Vergleich der für einen bestimmten Gehalt an alkenylfunktionellen Organosiloxy-Einheiten berechneten Blockzahl $R_{statistisch}$ mit der experimentell bestimmten Blockzahl $R_{exp}$ lässt sich entscheiden, ob die Verteilung der alkenylfunktionellen Organosiloxy-Einheiten statistisch zufällig ist, dann gilt $R_{exp} = R_{statistisch}$, oder zu einer blockartigen Verteilung tendiert, dann gilt $R_{exp} < R_{statistisch}$ oder bei $R_{exp} > R_{statistisch}$ zu einer alternierenden, also äquidistanten, Verteilung neigt. Eine segregationsarme und damit erfindungsgemäße Verteilung der alkenylfunktionellen Organosiloxy-Einheiten erfüllt die Relation (1).

$$R_{exp} \geq 0,9 \bullet R_{statistisch} \qquad\qquad (1)$$

Durch Einsetzen der Gleichung (1) in die Relation (1) erhält man somit die Relation (2).

$$R_{exp} \geq 180 \bullet X_a \bullet (1 - X_a) \qquad\qquad (2)$$

Die experimentell bestimmte Blocklänge $R_{exp}$ der erfindungsgemäßen Polydiorganosiloxane muss nach Relation (2) folglich, in Abhängigkeit vom Vinylgehalt, in den Grenzen zwischen 0,36 und 28,8 liegen.

Die experimentelle Bestimmung der Blockzahl $R_{exp}$ erfolgt beispielsweise mittels IR-Spektroskopie, bevorzugt mittels $^{29}$Si-NMR und ist in der Fachliteratur, wie beispielsweise bei M. J. Ziemelis; J. C. Saam, *Macromolecules* 1989, 22, 2111-2116, beschrieben. Deren diesbezügliche Offenbarung soll auch Gegenstand dieser Anmeldung sein.

Die Herstellung segregationsarmer beziehungsweise -freier Polyorganosiloxane (A) erfolgt mit dem Stand der Technik bekannten Verfahren, wie beispielsweise in EP 0 542 471 A1 und US 4,020,044 beschrieben, deren diesbezügliche Offenbarung auch Gegenstand dieser Anmeldung sein soll. Hier wird ein annähernd äquidistanter Einbau von Methylvinylsiloxy-Einheiten in die Polyorganosiloxankette ermöglicht, indem ein SiOH-endständiges Siloxan enger Molekulargewichtsverteilung mit einem Methylvinyldi(N-alkylacetamido)silan zur Umsetzung gebracht wird. In Analogie dazu lassen sich derartige Polyorganosiloxane auch durch heterofunktionelle Polykondensation SiOHendständiger Siloxane mit Vinylmethyldichlorsilan in Gegenwart von Aminen herstellen. Für die erfindungsgemäßen Siliconkautschukmassen geeignete Polyorganosiloxane (A) können des weiteren durch anionische Ringöffnungscopolymerisation zyklischer Siloxane mit starken Basen, wie Kaliumhydroxid oder Kaliumsiloxanolat, hergestellt werden, sofern genügend lange Equilibrierungszeiten eingehalten werden, um eine statistisch zufällige Verteilung der alkenylfunktionellen Organosiloxy-Einheiten zu gewährleisten. Auch durch $PNCl_2$ katalysierte Polykondensation linearer Oligosiloxandiole unter equilibrierenden Bedingungen kann eine statistisch zufällige Verteilung der alkenylfunktionellen Organosiloxy-Einheiten im Polyorganosiloxan erzielt werden.

In den erfindungsgemäßen Siliconkautschukmassen kann der Bestandteil (A) bevorzugt ein einziges Polyorganosiloxan oder ebenfalls bevorzugt eine Mischung unterschiedlicher Polyorganosiloxane sein.

Der Füllstoff (B) der erfindungsgemäßen Siliconkautschukmasse ist ein feinteiliger, anorganischer Feststoff mit einer nach BET gemessenen spezifischen Oberfläche von mindestens 30 $m^2/g$, bevorzugt 100 bis 800 $m^2/g$, besonders bevorzugt 150 bis 400 $m^2/g$. Beispielsweise werden Kieselsäuren, Ruße und feinteilige Oxide, Hydroxide, Carbonate, Sulfate oder Nitride von Metallen, wie Silizium, Aluminium, Titan, Zirkonium, Cer, Zink, Magnesium, Calcium, Eisen und Bor verwendet.

Bevorzugt wird Kieselsäure mit einer nach BET gemessenen spezifischen Oberfläche von mindestens 30 $m^2/g$ als Füllstoff (B) verwendet. Die in der erfindungsgemäßen Siliconkautschukmasse bevorzugt eingesetzten Füllstoffe sind pyrogen hergestellte Kieselsäuren, gefällte Kieselsäuren, unter Erhalt der Struktur entwässerte Kieselsäurehydrogele, auch als Aerogele bezeichnet, sowie Ruße. Besonders bevorzugt sind gefällte und pyrogen hergestellte Kieselsäuren.

Besonders bevorzugt sind die vernetzbaren Siliconkautschukmassen dadurch gekennzeichnet, dass der Füllstoff (B) oberflächenbehandelt ist.

Die Oberflächenbehandlung wird durch dem Stand der Technik bekannten Verfahren zur Hydrophobierung feinteiliger Füllstoffe erzielt. Die Hydrophobierung kann beispielsweise entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind siliziumorganische Verbindungen, die mit der Füllstoffoberfläche unter Ausbildung kovalenter Bindungen zu reagieren vermögen oder dauerhaft an der Füllstoffoberfläche physisorbiert werden.

Bevorzugte Hydrophobierungsmittel entsprechen der allgemeinen durchschnittlichen Formel (2) bis (3) oder einem Organopolysiloxan bestehend aus Einheiten der allgemeinen durchschnittlichen Formel (4)

$$R^3_{4-x}SiA_x \qquad (2)$$

$$(R^3_3Si)_yB \qquad (3)$$

$$R^3_zSiO_{(4-z)/2} \qquad (4)$$

wobei

$R^3$ gleich oder verschieden monovalenter, gegebenenfalls halogensubstituierter Kohlenwasserstoffrest mit 1 bis 12 Kohlenstoffatomen

A ein Halogen, -OH, $-OR^4$ oder $-OCOR^4$,

B $-NR^5_{3-y}$,

$R^4$ einen monovalenten Kohlenwasserstoffrest mit 1 bis 12 Kohlenstoffatomen,

$R^5$ ein Wasserstoffatom oder die gleiche Bedeutung wie $R^3$,

x 1, 2 oder 3,

y 1 oder 2 und

z 1, 2 oder 3

bedeuten.

Beispiele für Hydrophobierungsmittel sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; zyklische Diorgano(poly)siloxane, wie Octamethylcyclotetrasiloxan, Dekamethylcyclopentasiloxan; lineare Diorganopolysiloxane, wie Dimethylpolysiloxane mit Trimethylsiloxy-Endgruppen sowie Dimethylpolysiloxane mit Silanol- oder Alkoxy-Endgruppen; Disilazane, wie Hexaalkyldisilazane, insbesondere Hexamethyldisilazan, Divinyltetramethyldisilazan, Bis(trifluorpropyl)tetramethyldisilazan; zyklische Dimethylsilazane, wie Hexamethylcyclotrisilazan. Es können auch Mischungen der weiter oben genannten Hydrophobierungsmittel eingesetzt werden. Um die Hydrophobierung zu beschleunigen, erfolgt gegebenenfalls auch der Zusatz von katalytisch aktiven Additiven, wie beispielsweise Aminen, Metallhydroxiden und Wasser.

Die Hydrophobierung kann beispielsweise in einem Schritt unter Verwendung von einem oder einer Mischung aus mehreren Hydrophobiermitteln, aber auch unter Verwendung von einem oder mehreren Hydrophobiermitteln in mehreren Schritten erfolgen.

Bevorzugte Füllstoffe (B) weisen infolge einer Oberflächenbehandlung einen Kohlenstoffgehalt von mindestens 0,01 bis maximal 20 Gew.-%, bevorzugt zwischen 0.1 und 10 Gew.-%, besonders bevorzugt zwischen 0,5 bis 5 Gew.-% auf. Besonders bevorzugt sind vernetzbare Siliconkautschukmassen die dadurch gekennzeichnet sind, dass der Füllstoff (B) eine oberflächenbehandelte Kieselsäure, aufweisend 0,01 bis 2 Gew.-% Si-gebundene, aliphatisch ungesättigte Gruppen bedeutet. Beispielsweise handelt es sich bei diesen um Si-gebundene Vinylgruppen.

In der erfindungsgemäßen Siliconkautschukmasse wird der Bestandteil (B) bevorzugt als einzelne oder ebenfalls bevorzugt als eine Mischung mehrerer feinteiliger Füllstoffe verwendet.

Bevorzugt sind erfindungsgemäße, vernetzbare Siliconkautschukmassen, dadurch gekennzeichnet, dass der Vernetzer (C) aus der Gruppe enthaltend radikalisch- (C1) und additionsvernetzende Verbindungen (C2) ausgewählt wird.

Dabei sind bevorzugt zwischen 0,1 und 20 Gew.-% Vernetzer (C) in den erfindungsgemäßen Siliconkautschukmassen enthalten.

Bevorzugt ist die radikalische Vernetzung durch organische Peroxide. Als erfindungsgemäßer, eine radikalische Vernetzung bewirkender Bestandteil (C1) können grundsätzlich alle dem Stand der Technik entsprechenden und typischerweise in peroxidisch vernetzbaren Siliconkautschukmassen eingesetzten organischen Peroxide verwendet werden. Beispiele geeigneter Peroxide sind Dialkylperoxide, wie 2,5-Dimethyl-2,5-di(tert-butylperoxi)hexan, 1,1-Di-(tert-butylperoxy)-cyclohexan, 1,1-Di-(tert-butylperoxy)-3,3,5-rimethylcyclohexan, α-Hydroxyperoxy-α'-hydroxydicyclohexylperoxid, 3,6-Dicyclohexyliden-1,2,4,5-tetroxan, Di-tert-butylperoxid, tert-Butyl-tert-triptylperoxid und tert-Butyl-triethylmethylperoxid, Diaralkylperoxide, wie Dicumylperoxid, Alkylaralkylperoxide, wie tert-Butylcumylperoxid und α,α'-di(tert-Butylperoxi)-m/p-diisopropylbenzol, Alkylacylperoxide, wie t-Butylperbenzoat, und Diacylperoxide, wie Dibenzoylperoxid, Bis-(2-methylbenzoylperoxid), Bis-(4-methylbenzoylperoxid) und Bis-(2,4-dichlorbenzoylperoxid). Bevorzugt ist die Verwendung vinylspezifischer Peroxide, deren wichtigste Vertreter die Dialkyl- und Diaralkylperoxide sind. Besonders bevorzugt ist die Verwendung von 2,5-Dimethyl-2,5-di(tert-butylperoxi)hexan und Dicumylperoxid. Es können einzelne oder Mischungen unterschiedlicher Peroxide (C1) eingesetzt werden.

Der Gehalt der erfindungsgemäßen Siliconkautschukmasse an Bestandteil (C1) liegt vorzugsweise zwischen 0,1 und 5,0 Gew.-%, besonders bevorzugt zwischen 0,5 und 1,5 Gew.-%.

Bevorzugt sind somit die erfindungsgemäßen, vernetzbaren Siliconkautschukmassen, dadurch gekennzeichnet, dass der Vernetzer (C1) von 0,1 bis 5,0 Gewichts-% enthalten ist und ein organisches Peroxid oder eine Mischung aus organischen Peroxiden darstellt.

Als erfindungsgemäßer, für eine Additionsvernetzung notwendiger Bestandteil (C2) werden SiH-funktionelle Vernetzungsmittel verwendet, wie beispielsweise Silane, Siloxane und Siliconharze, deren Einheiten sich durch die allgemeine durchschnittliche Formel (5) darstellen lassen.

$$H_m R^1_n SiO_{(4-m-n)/2} \qquad (5)$$

wobei

$R^1$ die voranstehende Bedeutung

m und n positive Zahlen, welche die Relationen $0,005 \leq m \leq 1$ und $0,005 \leq n \leq 2$ erfüllen, mit der Maßgabe, dass pro Vernetzermolekül durchschnittlich mindestens 3 Si-gebundene Wasserstoffatome vorhanden sind

bedeutet.

Der Wasserstoffgehalt in (C2) von direkt an Siliziumatomen gebundenen Wasserstoffatomen liegt vorzugsweise im Bereich 0,002 bis 1,7 Gew.-% Wasserstoff, besonders bevorzugt zwischen 0,1 und 1,7 Gew.-%. Das Vernetzungsmittel (C2) enthält mindestens 3 und höchstens 600 Siliziumatome pro Molekül, vorzugsweise 4 bis 200 Siliziumatome. Die Struktur des Vernetzungsmittels (C2) kann linear, verzweigt, zyklisch oder harz- beziehungsweise netzwerkartig sein. Die im Vernetzungsmittel (C2) enthaltenen Reste $R^1$ werden bevorzugt so gewählt, dass diese mit den im Bestandteil (A) befindlichen Resten verträglich sind, so dass die Bestandteile (A) und (C2) mischbar sind. Besonders bevorzugte Vernetzungsmittel sind Poly(dimethylsiloxan-co-methylhydrogensiloxane).

Das Vernetzungsmittel (C2) ist vorzugsweise in einer solchen Menge in der vernetzbaren Siliconkautschukmasse enthalten, dass das Molverhältnis von SiH-Gruppen zu den alkenylfunktionellen Einheiten des Bestandteiles (A) bei 0,5 bis 5, bevorzugt bei 1,0 bis 3,0, liegt. Das Vernetzungsmittel (C2) kann auch eine Mischung mehrerer additionsvernetzender Bestandteile sein.

Erfindungsgemäße Siliconkautschukmassen können als weiteren möglichen Bestandteil (D) 0 bis 10 Gewichts-Teile beidseitig Vinyldiorganosiloxy-terminierte Polyorganosiloxane enthalten, die der allgemeinen durchschnittlichen Formel (6) entsprechen.

$$R^1_2 ViSiO\text{-}[R^1_2 SiO]_n\text{-}SiR^1_2 Vi \qquad (6)$$

wobei

n 3.000 bis 10.000,

Vi ein Vinyl-Rest bedeutet und

$R^1$ die gleiche Bedeutung wie oben hat.

In den erfindungsgemäßen Siliconkautschukmassen können gegebenenfalls auch 0 bis 200 Gewichts-Teile weiterer Bestandteile (E) eingemischt werden. Sie werden ausgewählt aus der Gruppe enthaltend nicht verstärkende Füllstoffe, wie Talkum oder Quarzmehl, Inhibitoren, Katalysatoren, Weichmacher, Farbpigmente, Stabilisatoren, flammhemmende Zusätze, Entformbarkeitsadditive, Haftvermittler, Mikrohohlkugeln oder Ihren Mischungen.

Die als Hydrosilylierung bezeichnete Additionsreaktion zwischen den Alkenylgruppen des Bestandteiles (A) und den SiH-Gruppen des Vernetzungsmittels (C2) erfolgt bevorzugt in Gegenwart eines Katalysators. Grundsätzlich können alle dem Stand der Technik entsprechenden und typischerweise in additionsvernetzbaren Siliconkautschukmassen eingesetzten Hydrosilylierungskatalysatoren verwendet werden. Dies sind bevorzugt Metalle, wie Platin, Rhodium, Palladium, Ruthenium und Iridium, sowie sich von diesen ableitende metallorganische Verbindungen. Bevorzugt sind Platin und Platinverbindungen, besonders bevorzugt sind Komplexverbindungen des Platins mit Vinylsiloxanen, wie sym-Divinyltetramethyldisiloxan auch als Karstedt-Katalysator bekannt.

Die Menge des eingesetzten Hydrosilylierungskatalysators richtet sich im Wesentlichen nach der gewünschten Vernetzungsgeschwindigkeit sowie ökonomischen Gesichtspunkten. Vorzugsweise beträgt der Gehalt einer additionsvernetzbaren erfindungsgemäßen Siliconkautschukgesamtmasse an Hydrosilylierungskatalysator, bezogen auf das darin enthaltene Metall, zwischen 0,05 und 1.000 Gew.-ppm, besonders bevorzugt zwischen 1 und 100 Gew.-ppm.

Der wesentliche Vorteil der erfindungsgemäßen Siliconkautschukmassen liegt darin, dass, im Gegensatz zum Stand der Technik, allein durch Verwendung von Methylvinylsiloxyeinheiten(VM)-reicher Polyorganosiloxane mit gleichmäßiger Verteilung der VM-Gruppen höchste Dauerbelastungsbeständigkeiten erzielt werden, die jene herkömmlicher Siliconkautschukzusammensetzungen bei weitem übertreffen und den gestiegenen Anforderungen an die Servicezeit dynamisch-mechanisch beanspruchter Siliconelastomerteile vollkommen gerecht werden.

Erfindungsgemäße Siliconelastomere werden erhalten durch Vernetzung der erfindungsgemäßen Siliconkautschukmassen. Sie weisen eine Dauerbelastungsbeständigkeit von mindestens 4 Millionen Deformationszyklen auf. Bevorzugt weisen sie mehr als 10 Millionen, besonders bevorzugt mehr als 15 Millionen Deformationszyklen auf.

Die Herstellung erfindungsgemäßer Siliconelastomere kann nach sämtlichen, dem Stand der Technik entsprechenden Herstellverfahren erfolgen. Das Verfahren zur Herstellung der Siliconelastomere ist bevorzugt dadurch gekennzeichnet, dass die Siliconkautschukmasse bei erhöhter Temperatur drucklos oder unter erhöhtem Druck vernetzt wird. Weiterhin ist das Verfahren zur Herstellung der Siliconelastomere besonders bevorzugt dadurch gekennzeichnet, dass das Slikonelastomer nach der Vernetzung bei erhöhter Temperatur getempert wird.

Vorzugsweise werden die erfindungsgemäßen Siliconelastomere durch Extrusion, Kalandrieren, Spritzguss oder Pressformen hergestellt. Das Verfahren zur Herstellung der Siliconelastomere ist dadurch gekennzeichnet, dass die Siliconkautschukmasse vorzugsweise bei erhöhter Temperatur vernetzt wird. Bevorzugt erfolgt die Vernetzung bei einer Temperatur zwischen 100 und 400°C über einen Zeitraum von wenigen Sekunden bis etwa 30 Minuten. Die Vernetzung kann dabei drucklos oder unter erhöhtem Druck erfolgen, drucklos beispielsweise im Extrusionsverfahren oder durch Kalandrieren, unter erhöhtem Druck beispielsweise im Spritzguss- oder Pressformverfahren. Der Druck liegt dabei, je nach Verarbeitungsverfahren, bevorzugt zwischen 0.1 und 50 MPa.

Die hergestellten Siliconelastomere können anschließend bei erhöhter Temperatur getempert werden, um die Vernetzungsreaktion zu vervollständigen und flüchtige Bestandteile zu entfernen. Die Siliconelastomere können auch anderen Nachbehandlungsverfahren unterzogen werden, wie beispielsweise in EP 0 919 594 B1 beschrieben, deren diesbezügliche Offenbarung auch Gegenstand dieser Anmeldung sein soll.

Erfindungsgemäße Siliconelastomere zeichnen sich zudem durch niedrige Werte in der relativen spezifischen Verlustenergie aus, was mit einem sehr vorteilhaften mechanischen Verhalten verbunden ist. Ihre bevorzugte Verwendung ist der

Einsatz in Bereichen mit hohen, dauerhaften dynamisch-mechanischen Belastungen. Insbesondere zeigen die aus den erfindungsgemäßen Siliconkautschukmassen hergestellten keypads eine ausgezeichnete elastische Response, auch als Schnappigkeit bezeichnet.

Das Vorhandensein kovalent auf der Füllstoffoberfläche gebundener Alkenylgruppen wirkt sich ebenfalls positiv auf die Dauerbelastungsbeständigkeit aus. Derartige Siliconkautschukmassen sind daher besonders bevorzugt.

**Beispiele**

Die im Folgenden angegebenen Viskositäten wurden bei einer Temperatur von 25°C und einer Scherrate von 1 sec$^{-1}$ bestimmt. Die Plastizität der Polymere wurde in einem Brabender-Plastograph bei 25°C und 60 Umdrehungen pro Minute bestimmt. M2 bezeichnet eine Dimethylsiloxyeinheit, VM eine Methylvinylsiloxyeinheit.

Zunächst erfolgte die Herstellung der erfindungs- und nichterfindungsgemäßen Polydiorganosiloxane (A) gemäß den nachfolgenden Verfahren. Die aus dem $^1$H- beziehungsweise $^{29}$Si-NMR-Spektrum abgeleiteten Eigenschaften der Polymere P1 bis P10 sind in Tabelle 1 zusammengefasst.

Polymer P1: In einem 3 1 Sigma-Kneter werden 1.300 g eines in den endständigen Einheiten je eine Si-gebundene Hydroxylgruppe enthaltenden Dimethylpolysiloxans mit einer Viskosität von 140 mPa • s, 18 g eines Dimethylvinylsiloxy-endständigen Dimethylpolysiloxans mit einer Viskosität von 174 mPa•s, 3,68 g eines in den endständigen Einheiten je eine Hydroxylgruppe enthaltenden, niedermolekularen Mischpolymerisates aus Dimethylsiloxan- und Methylvinylsiloxaneinheiten mit einem Gehalt an Methylvinylsiloxaneinheiten von 24,8 Mol-% und einer Viskosität von 49 mPa•s, sowie 0,3 ml einer 25 Gew.-%igen Lösung von Phosphornitridchlorid in Essigsäureethylester vermischt und 10 Minuten bei 100°C unter Vakuum bei 5 hPa kondensiert und äquilibriert. Anschließend werden 10 ml sym-Divinyltetramethyldisilazan zugegeben und die Masse 2 Stunden bei 150°C unter Normaldruck geknetet. Abschließend wird das erhaltene Polymer 1 Stunde bei 150°C unter Vakuum bei weniger als 2 hPa und fortwährendem Kneten von flüchtigen Bestandteilen befreit. Das erhaltene hochpolymere Mischpolymerisat aus M2- und VM-Einheiten mit endständigen Dimethylvinylsiloxyeinheiten weist eine Plastizität von 6,5 kN•m auf.

Polymer P2: Die Herstellung erfolgt analog Polymer P1, jedoch mit dem Unterschied, dass die Menge des in den endständigen Einheiten je eine Hydroxylgruppe enthaltenden, niedermolekularen Mischpolymerisates aus Dimethylsiloxan- und Methylvinylsiloxaneinheiten mit einem Gehalt an Methylvinylsiloxaneinheiten von 24,8 Mol-% und einer Viskosität von 49 mPa•s von 3,68 g auf 18,59 g erhöht wird. Das erhaltene hochpolymere Mischpolymerisat aus M2- und VM-Einheiten mit endständigen Dimethylvinylsiloxyeinheiten weist eine Plastizität von 6,2 kN•m auf.

Polymer P3: In einem 3 1 Sigma-Kneter werden 1.300 g eines in den endständigen Einheiten je eine Si-gebundene Hydroxylgruppe enthaltenden Dimethylpolysiloxans mit einer Viskosität von 140 mPa•s, 18 g eines Dimethylvinylsiloxy-endständigen Dimethylpolysiloxans mit einer Viskosität von 174 mPa•s, 18,56 g eines in den endständigen Einheiten je eine Hydroxylgruppe enthaltenden, niedermolekularen Mischpolymerisates aus Dimethylsiloxan- und Methylvinylsiloxaneinheiten mit einem Gehalt an Methylvinylsiloxaneinheiten von 24,8 Mol-% und einer Viskosität von 49 mPa•s, sowie 0,1 ml einer 25 Gew.-%igen Lösung von Phosphornitridchlorid in Essigsäureethylester vermischt und 1 Stunde bei 120°C unter Vakuum bei 2 hPa kondensiert und äquilibriert. Anschließend werden nochmals 0,2 ml einer 25 Gew.-%igen Lösung von Phosphornitridchlorid in Essigsäureethylester zugegeben und die Masse eine weitere Stunde bei 120°C unter Vakuum geknetet. Danach wird die Masse mit 10 ml sym-Divinyltetramethyldisilazan versetzt und 2 Stunden bei 150°C unter Normaldruck geknetet. Abschließend wird das erhaltene Polymer 1 Stunde bei 150°C unter Vakuum bei weniger als 2 hPa und fortwährendem Kneten von flüchtigen Bestandteilen befreit. Das erhaltene hochpolymere Mischpolymerisat aus M2- und VM-Einheiten mit endständigen Dimethylvinylsiloxyeinheiten weist eine Plastizität von 6,3 kN•m auf.

Polymer P4: Die Herstellung erfolgt analog Polymer P1, jedoch mit dem Unterschied, dass als VM-haltiges Mischpolymerisat 62,2 g eines in den endständigen Einheiten je eine Hydroxylgruppe enthaltenden, niedermolekularen Mischpolymerisates aus Dimethylsiloxan- und Methylvinylsiloxaneinheiten mit einem Gehalt an Methylvinylsiloxaneinheiten von 6,7 Mol-% und einer Viskosität von 40 mPa•s eingesetzt werden. Das erhaltene hochpolymere Mischpolymerisat aus M2- und VM-Einheiten mit endständigen Dimethylvinylsiloxyeinheiten weist eine Plastizität von 5,8 kN•m auf.

Polymer P5: Die Herstellung erfolgte analog Polymer P3, jedoch mit dem Unterschied, dass als VM-haltiges Mischpolymerisat 133 g eines in den endständigen Einheiten je eine Hydroxylgruppe enthaltenden, niedermolekularen Mischpolymerisates aus Dimethylsiloxan- und Methylvinylsiloxaneinheiten mit einem Gehalt an Methylvinylsiloxaneinheiten von 3,1 Mol-% und einer Viskosität von 44 mPa • s eingesetzt werden. Das erhaltene hochpolymere Mischpolymerisat aus M2- und VM-Einheiten mit endständigen Dimethylvinylsiloxyeinheiten weist eine Plastizität von 6,4 kN·m auf.

Polymer P6: In einem Reaktionsgefäß werden 100 Gewichtsteile frisch destilliertes Octamethylcyclotetrasiloxan, 0,54 Gewichtsteile frisch destilliertes 1,3,5,7-Tetramethyltetravinylcyclotetrasiloxan und 0,065 Gewichtsteile Decamethyltetrasiloxan homogen vermischt und auf 130°C erhitzt. Anschließend wurde die Mischung mit 0,02 Gewichtsteilen Kaliumvinyldimethylsilanolat versetzt und bei einer Temperatur von 140°C unter Ausschluss von Feuchtigkeit 4 Stunden gerührt. Nachfolgend wurde die Reaktion durch Zugabe von 0,02 Gewichtsteilen Essigsäure beendet und die resultierende Masse 1 Stunde bei einer Temperatur von 170°C von flüchtigen Bestandteilen befreit. Das erhaltene hochpolymere Mischpolymerisat aus M2- und VM-Einheiten mit endständigen Trimethylsiloxyeinheiten weist eine Plastizität von 6,1 kN·m auf.

Polymer P7: Die Herstellung erfolgte analog Polymer P6, jedoch mit dem Unterschied, dass nach Zugabe des Kaliumvinyldimethylsilanolates die Mischung bei einer Temperatur von 140°C unter Ausschluss von Feuchtigkeit 12 Stunden gerührt wurde. Das erhaltene hochpolymere Mischpolymerisat aus M2- und VM-Einheiten mit endständigen Trimethylsiloxyeinheiten weist eine Plastizität von 5,9 kN·m auf.

Polymer P8: Herstellung erfolgte analog Polymer P6, jedoch mit dem Unterschied, dass die Einsatzmenge an frisch destilliertem 1,3,5,7-Tetramethyltetravinylcyclotetrasiloxan von 0,54 Gewichtsteilen auf 0,73 Gewichtsteile erhöht wurde. Das erhaltene hochpolymere Mischpolymerisat aus M2- und VM-Einheiten mit endständigen Trimethylsiloxyeinheiten weist eine Plastizität von 6,5 kN·m auf.

Polymer P9: Die Herstellung erfolgte analog Polymer P8, jedoch mit dem Unterschied, dass nach Zugabe des Kaliumvinyldimethylsilanolates die Mischung bei einer Temperatur von 140°C unter Ausschluss von Feuchtigkeit 12 Stunden gerührt wurde. Das erhaltene hochpolymere Mischpolymerisat aus M2- und VM-Einheiten mit endständigen Trimethylsiloxyeinheiten weist eine Plastizität von 5,9 kN·m auf.

Polymer P10: Die Herstellung erfolgt analog Polymer P3, jedoch mit dem Unterschied, dass die Menge des eingesetzten niedermolekularen Mischpolymerisates von 18,56 auf 51,45 g erhöht wird. Das erhaltene hochpolymere Mischpolymerisat aus M2- und VM-Einheiten mit endständigen Dimethylvinylsiloxyeinheiten weist eine Plastizität von 7,6 kN • m auf.

Tabelle 1

| Polymer | VM-Gehalt ($^1$H-NMR) [Mol-%] | Blocklänge $R_{stat.}$ (berechnet) | Blocklänge $R_{exp.}$ ($^{29}$Si-NMR) | $0.9 \cdot R_{stat.}$ | $R_{exp.} \geq 0.9 \cdot R_{stat.}$ | erfindungsgemäß |
|---|---|---|---|---|---|---|
| P1 | 0,05 | 0,10 | nicht messbar | - | nicht messbar | - |
| P2 | 0,28 | 0,56 | 0,37 | 0,504 | nein | - |
| P3 | 0,26 | 0,52 | 0,49 | 0,468 | ja | + |
| P4 | 0,29 | 0,58 | 0,55 | 0,522 | ja | + |
| P5 | 0,30 | 0,60 | >0,60 | 0,540 | ja | + |
| P6 | 0,46 | 0,91 | 0,73 | 0,819 | nein | - |
| P7 | 0,44 | 0,88 | >0,88 | 0,792 | ja | + |
| P8 | 0,53 | 1,05 | 0,92 | 0,945 | nein | - |
| P9 | 0,57 | 1,13 | >1,13 | 1,017 | ja | + |
| P10 | 0,64 | 1,27 | >1,27 | 1,143 | ja | + |

Aus Tabelle 1 sind die nach Gleichung (1) theoretisch und experimentell bestimmten Eigenschaften der Polydiorganosiloxane, als Polymer P1 bis P10 bezeichnet, aufgestellt. Die Eigenschaften weisen P3 bis P5, P7 und P9 bis P10 als erfindungsgemäße Polyorganosiloxane (A) aus.

Für die Herstellung der vernetzbaren Siliconkautschukmassen wurden die Polymere P1 bis P10 verwendet. Es wurden sowohl peroxidisch vernetzbare als auch additionsvernetzbare Siliconkautschukmassen hergestellt und zu Siliconelastomeren vernetzt. Als Füllstoff wurde oberflächenbehandelte, gefällte Kieselsäure mit und ohne kovalent gebundene Vinylgruppen verwendet.

Die erfindungsgemäßen Beispiele B1, B5, B6, B8, B12, B13 und B14 sowie Vergleichsbeispiele V1, V2, V3 und V4 wurden als peroxidisch vernetzbare Siliconkautschukmassen mit Füllstoff ohne kovalent gebundene Vinylsiloxygruppen wie folgt hergestellt. In einem Sigma-Kneter werden 160 g eines Polyorganosiloxans, wie in Tabelle 2 aufgezeigt, vorgelegt und mit 4,0 g eines linearen Dimethylsiloxandiols, welches einen von endständigen Silanolgruppen herrührenden OH-Gehalt von 8 Gew.-% aufweist, vermischt. Anschließend werden portionsweise insgesamt 64 g gefällte Kieselsäure Hi-Sil® 928 der Firma PPG Industries und 0,16 g Kalziumstearat eingemischt, die Masse wird auf 150°C erhitzt und 2 Stunden geknetet. Nach dem Abkühlen der Masse auf Raumtemperatur werden pro 100 g der Masse 0,6 g 2,5-Dimethyl-2,5-di(tert-butylperoxy)hexan auf der Walze eingemischt.

Die erfindungsgemäßen Beispiele B2 und B9 sowie das Vergleichsbeispiel V5 wurden als peroxidisch vernetzbare Siliconkautschukmassen mit Füllstoff mit kovalent gebundenen Vinylsiloxygruppen wie folgt hergestellt. Die Herstellung erfolgt analog der vorherigen Vorschrift, mit dem Unterschied, dass statt der 4,0 g des linearen Dimethylsiloxandiols eine Mischung bestehend aus 3 g linearem Dimethylsiloxandiol, welches einen von endständigen Silanolgruppen herrührenden OH-Gehalt von 8 Gew.-% aufweist, sowie 1,5 g eines in den endständigen Einheiten je eine Hydroxylgruppe enthaltendes, niedermolekulares Mischpolymerisat aus Dimethylsiloxan- und Methylvinylsiloxaneinheiten mit einem Gehalt an Methylvinylsiloxaneinheiten von 6,7 Mol-% und einer Viskosität von 40 mPa•s eingesetzt wird.

Die erfindungsgemäßen Beispiele B3, B7 und B10 wurden als additionsvernetzbare Siliconkautschukmassen mit Füllstoff ohne kovalent gebundene Vinylsiloxygruppen wie folgt hergestellt. In einem Sigma-Kneter werden 1.290 g eines Polyorganosiloxans, wie in Tabelle 2 aufgezeigt, vorgelegt und drei Portionen jeweils bestehend aus 9 g Wasser, 35 g Hexamethyldisilazan und 195 g einer pyrogen erzeugten Kieselsäure mit einer spezifischen BET Oberfläche von 300 m$^2$/g, erhältlich bei der Firma Wacker-Chemie GmbH unter der Bezeichnung HDK® T30, bei Raumtemperatur zugegeben und jeweils während 20 Minuten homogen vermischt. Nach Zugabe der dritten Portion wird die Mischung im Kneter auf 150°C aufgeheizt und während 3 h homogenisiert und unter Vakuum bei weniger als 10 hPa von flüchtigen Bestandteilen befreit; abschließend wird die Masse aus dem Kneter ausgetragen und auf Raumtemperatur abgekühlt. Zur Herstellung der additionsvernetzbaren Siliconkautschukmasse werden 200 Gewichtsteile der auf die voranstehend beschriebene Weise hergestellten Masse mit 0,1 g Ethinylcyclohexanol, 0,2 g einer Lösung eines Platin-sym-Divinyltetramethylsiloxan-Komplexes in einem Dimethylvinylsiloxy-endständigen Polydimethylsiloxan mit einer Viskosität von 1 Pa•s mit einem Platingehalt von 1,1 Gew.-%, sowie einem Methylhydrogensiloxan-Dimethylsiloxan-Copolymer, welches einen Gehalt an Methylhydrogensiloxy-Einheiten von 32 Mol-% und eine Viskosität von 95 mPa•s aufweist, vermischt. Dabei ist die Menge an Methylhydrogensiloxan-Dimethylsiloxan-Copolymer in Abhängigkeit vom eingesetzten Polyorganosiloxan so bemessen, dass die Siliconkautschukgesamtmasse ein molares Verhältnis von Sigebundenen Vinylgruppen zu Methylhydrogensiloxygruppen von 1 zu 1,8 aufweist.

Die erfindungsgemäßen Beispiele B4 und B11 wurden als additionsvernetzbare Siliconkautschukmassen mit Füllstoff mit kovalent gebundenen Vinylsiloxygruppen wie folgt hergestellt. Die Herstellung erfolgt analog der vorherigen Vorschrift, mit dem Unterschied, dass statt des Hexamethyldisilazans jeweils eine Mischung bestehend aus 9 Gewichtsteilen Hexamethyldisilazan und 1 Gewichtsteil Divinyltetramethyldisilazan eingesetzt wird.

Die Herstellung der Siliconelastomere aus den Siliconkautschukmassen erfolgte laut folgender Vorschrift. Die Vernetzung der Siliconkautschukmassen erfolgte während 15 Minuten bei einer Temperatur von 165°C in Pressformen bei einem Druck von 5,45 MPa. Die hergestellten 2 beziehungsweise 6 mm dicken Folien sowie keypads wurden anschließend 4 h bei 200°C in einem Umlufttrockenschrank getempert.

Die Charakterisierung des dynamisch-mechanischen Verhaltens der hergestellten Siliconelastomere wurde nach der folgenden Vorschrift durchgeführt. Die Charakterisierung des dynamisch-mechanischen Verhaltens erfolgte gemäß DIN 53 535 bei einer Temperatur von 20°C anhand zylindrischer Probekörper mit einem Durchmesser von 6 mm und einer Höhe von 10 mm bei einer Frequenz von 10 Hz, einer statischen Mittelverformung, als uniaxiale Kompression bezeichnet, von 20% und einer dynamischen Verformungsamplitude von 5% mittels eines dynamischmechanischen Spektrometers der Fa. GABO QUALMETER Testanlagen GmbH (Ahlden) vom Typ "Eplexor". Die Berechnung der spezifischen Verlustenergie $E_v$ erfolgte anhand der Formel $E_v = \pi \bullet \varepsilon_a \bullet \sigma_a \bullet \sin\delta$; die Berechnung der spezifischen Speicherenergie $E_S$, welche die infolge der dynamischen Beanspruchung sich ändernde, reversibel in einer Volumeneinheit des Probekörpers gespeicherte Deformationsenergie bezeichnet, erfolgte nach der Formel $E_S = 2 \bullet \varepsilon_m \bullet \sigma_a - (\pi/2) \bullet \varepsilon_a \bullet \sigma_a \bullet \sin\delta$, wobei $\varepsilon_a$ die dynamische Verformungsamplitude, $\sigma_a$ die dynamische Spannungsamplitude, $\varepsilon_m$ die statische Mittelverformung und $\delta$ den Verlustwinkel (Phasenverschiebung) bezeichnet. Die relative spezifische Verlustenergie ist gegeben durch $ER = (E_v/E_s) \bullet 100\%$.

Die Bestimmung der Dauerbelastungsbeständigkeit der hergestellten Siliconelastomere wurde nach folgender Vorschrift durchgeführt. Die Bestimmung der Dauerbelastungsbeständigkeit erfolgte anhand 6 mm hoher, $20 \bullet 20$ mm breiter keypads, welche mit einer Kraftamplitude von 1,962 N dauerhaft jeweils 6 vollständigen Deformationszyklen pro Sekunde, entsprechend 6 Hz, unterworfen wurden. Die Messungen erfolgten bei 20°C mit einem Gerät der Fa. ITF Engineering GmbH/Denzingen mit der Bezeichnung "Prüfsystem A 8274" und der Steuereinheit "DTA 9616". Die Dauerbelastungsbeständigkeit entspricht der Anzahl an Deformationszyklen die notwendig sind, um das mechanische Versagen, also den Bruch, des keypads herbeizuführen. Die Dauerbelastungsbeständigkeit wird auch als service life bezeichnet. Es wurden pro Material 5 Probekörper getestet, wobei die in Tabelle 2 angegebenen Dauerbelastungsbeständigkeiten jeweils den aus den fünf Werten bestimmten Medianwert repräsentieren.

Die Tabelle 2 zeigt erfindungsgemäße Beispiele (B1 bis B14) und Vergleichsbeispiele (V1 bis V5) und ihre Eigenschaften nach Vernetzung bei dauerhafter dynamisch-mechanischer Belastung. Um den Vergleich des Einflusses der Zusammensetzung der Siliconkautschuke auf Ihre Eigenschaften zu erleichtern, zeigt Tabelle 2 zudem die verwendeten Polymere, den verwendeten Füllstoff mit (+) und ohne (-) kovalent gebundene Vinylgruppen und die Art des Vernetzers, (P) für peroxidisch- und (A) für additionsvernetzbar.

Tabelle 2

| Beispiel | Polymer | Füllstoff kovalent gebundene Vinylgruppen | Vernetzer | Dauerbelastungsbeständigkeit [$\bullet 10^6$ Zyklen] | Relative spezifische Verlustenergie [%] |
|---|---|---|---|---|---|
| V1 | P1 | - | P | 1,1 | 11,2 |
| V2 | P2 | - | P | 1,8 | 6,3 |
| V3 | P6 | - | P | 2,6 | 6,6 |
| V4 | P8 | - | P | 3,8 | 5,9 |
| V5 | P8 | + | P | 4,1 | 5,2 |
| B1 | P3 | - | P | 4,2 | 4,2 |
| B2 | P3 | + | P | 5,6 | 4,0 |
| B3 | P3 | - | A | 4,7 | 5,5 |
| B4 | P3 | + | A | 6,0 | 5,1 |
| B5 | P4 | - | P | 8,0 | 5,1 |
| B6 | P5 | - | P | 9,2 | 5,3 |
| B7 | P5 | - | A | 10,1 | 5,0 |

(fortgesetzt)

| Beispiel | Polymer | Füllstoff kovalent gebundene Vinylgruppen | Vernetzer | Dauerbelastungsbeständigkeit [●10$^6$ Zyklen] | Relative spezifische Verlustenergie [%] |
|----------|---------|------------------------------------------|-----------|-----------------------------------------------|------------------------------------------|
| B8 | P7 | - | P | 16,4 | 3,7 |
| B9 | P7 | + | P | 18,9 | 3,4 |
| B10 | P7 | - | A | 17,5 | 3,5 |
| B11 | P7 | + | A | 17,9 | 3,4 |
| B12 | P9 | - | P | 21,9 | 2,1 |
| B13 | P10 | + | P | 27,3 | 2,0 |
| B14 | P10 | - | P | 32,5 | 1,6 |

In Tabelle 2 ist der Einfluss verschiedener Faktoren auf die resultierenden mechanischen Eigenschaften der Siliconkautschuke gut nachvollziehbar. Ein Vergleich von V2 mit B1, V3 mit B8 sowie V5 mit B12 zeigt eine starke Erhöhung der Dauerbelastungsbeständigkeit und Erniedrigung der relativen spezifischen Verlustenergie, alleine durch die segregationsarme Verteilung der VM-Einheiten in der Polymerkette von B1, B8 und B12.

Der Vergleich von B2 mit B13 und B1 mit B14 zeigt eine starke Erhöhung der Dauerbelastungsbeständigkeit und Erniedrigung der relativen spezifischen Verlustenergie alleine durch Erhöhung des VM-Gehaltes des Polyorganosiloxans (A) in dem Silikonkautschuk von B13 und B14.

Der Vergleich von V2 mit B14 und V3 mit B12 zeigt, dass die Kombination aus hohem VM-Gehalt bei gleichzeitiger segregationsarmer Verteilung in der Polymerkette von B14 und B12 zu einer sehr starken Erhöhung der Dauerbelastungsbeständigkeit sowie Erniedrigung der relativen spezifischen Verlustenergie führt.

Der Vergleich von V4 mit V5, B1 mit B2, B3 mit B4, B8 mit B9, B10 mit B11 sowie B13 mit B14 zeigt, dass am Füllstoff (B) kovalent gebundene Vinylgruppen zu einer weiteren, wenn auch geringen, Erhöhung der Dauerbelastungsbeständigkeit und Erniedrigung der relativen spezifischen Verlustenergie beitragen.

Dahingegen zeigt der Vergleich von B1 mit B3, B8 mit B10 und B9 mit B11, dass die Art der Vernetzung auf diese mechanischen Eigenschaften keinen Einfluss hat.

## Patentansprüche

1.  Vernetzbare Siliconkautschukmassen, enthaltend

(A) 100 Gewichts-Teile mindestens eines Polydiorganosiloxans, das Organosiloxy-Einheiten mit Si-C gebundenen, aliphatisch ungesättigten Gruppen aufweist,
(B) 1 - 90 Gewichts-Teile mindestens eines verstärkenden Füllstoffs der als ein feinteiliger, anorganischer Feststoff mit einer spezifischen Oberfläche von mindestens 30 m$^2$/g vorliegt,
(C) 0,1 - 20 Gewichts-Teile mindestens eines Vernetzers,
(D) 0 - 10 Gewichts-Teile eines beidseitig Vinyldiorganosiloxy-terminierten Polydiorganosiloxans, dessen kettenständige Einheiten frei von aliphatisch ungesättigten Gruppen sind, mit einem mittleren Polymerisationsgrad zwischen 3.000 und 10.000,
(E) 0 - 200 Gewichts-Teile weiterer Bestandteile ausgewählt aus der Gruppe enthalten nicht verstärkende Füllstoffe, Talkum, Quarzmehl, Inhibitoren, Katalysatoren, Weichmacher, Farbpigmente, Stabilisatoren, flammhemmende Zusätze, Haftvermittler, Entformbarkeitsadditive, Mikrohohlkugeln oder Ihren Mischungen,

**dadurch gekennzeichnet, dass** das Polydiorganosiloxan (A)

(a) einen mittleren Polymerisationsgrad zwischen 3.000 und 10.000,
(b) 0,2 bis 20 Mol-% Organosiloxy-Einheiten, enthaltend aliphatisch ungesättigte Gruppen, und
(c) eine segregationsarme Verteilung der Organosiloxy-Einheiten, enthaltend aliphatisch ungesättigte Gruppen, mit der Maßgabe, dass die Blockzahl $R \geq 180 \cdot X_a \cdot (1- X_a)$, wobei $X_a$ den Molenbruch dieser Organosiloxy-Einheiten bedeutet,

aufweist.

**2.** Vernetzbare Siliconkautschukmassen gemäß Anspruch 1, **dadurch gekennzeichnet, dass** das Polydiorganosiloxan (A) einen Anteil von 0,4 bis 10 Mol-% Organosiloxy-Einheiten, aufweisend aliphatisch ungesättigte Gruppen, enthält.

**3.** Vernetzbare Siliconkautschukmassen gemäß Anspruch 1 oder 2, **dadurch gekennzeichnet, dass** der Füllstoff (B) oberflächenbehandelt ist.

**4.** Vernetzbare Siliconkautschukmassen gemäß einem der Ansprüche 1 bis 3, **dadurch gekennzeichnet, dass** der Füllstoff (B) eine oberflächenbehandelte Kieselsäure, aufweisend 0,01 bis 2 Gew.-% Si-gebundene, aliphatisch ungesättigte Gruppen bedeutet.

**5.** Vernetzbare Siliconkautschukmassen gemäß einem der Ansprüche 1 bis 4, **dadurch gekennzeichnet, dass** der Vernetzer (C) aus der Gruppe enthaltend radikalisch- (C1) und additionsvernetzende Verbindungen (C2) ausgewählt wird.

**6.** Vernetzbare Siliconkautschukmassen gemäß einem der Ansprüche 1 bis 5, **dadurch gekennzeichnet, dass** der Vernetzer (C1) von 0,3 bis 5,0 Gewichts-% enthalten ist und ein organisches Peroxid oder eine Mischung aus organischen,Peroxiden darstellt.

**7.** Siliconelastomere erhalten durch Vernetzung der Siliconkautschukmassen gemäß einem der Ansprüche 1 bis 6.

**8.** Verfahren zur Herstellung der Siliconelastomere gemäß Anspruch 7, **dadurch gekennzeichnet, dass** die Siliconkautschukmasse gemäß einem der Ansprüche 1 bis 6 bei erhöhter Temperatur drucklos oder unter erhöhtem Druck vernetzt wird.

**9.** Verfahren zur Herstellung der Siliconelastomere gemäß Anspruch 8, **dadurch gekennzeichnet, dass** das Slikonelastomer nach der Vernetzung bei erhöhter Temperatur getempert wird.

**10.** Verwendung der Siliconelastomere gemäß Anspruch 7 zum Einsatz in Bereichen mit hohen, dauerhaften dynamischmechanischen Belastungen.

**Claims**

**1.** Crosslinkable silicone rubber compositions comprising

(A) 100 parts by weight of at least one polydiorganosiloxane comprising organosiloxy units having Si-C-bonded, aliphatically unsaturated groups,
(B) 1 - 90 parts by weight of at least one reinforcing filler which is present as a finely divided, inorganic solid having a specific surface area of at least 30 $m^2$/g,
(C) 0.1 - 20 parts by weight of at least one crosslinker,
(D) 0 - 10 parts by weight of a polydiorganosiloxane which is terminated by vinyldiorganosiloxy groups at both ends and whose units within the chain are free of aliphatically unsaturated groups and which has a mean degree of polymerization of from 3000 to 10 000,
(E) 0 - 200 parts by weight of further constituents selected from the group consisting of nonreinforcing fillers, talc, quartz flour, inhibitors, catalysts, plasticizers, pigments, stabilizers, flame-retardant additives, bonding agents, mold release agents, hollow microspheres and mixtures thereof,

**characterized in that** the polydiorganosiloxane (A) has

(a) a mean degree of polymerization of from 3000 to 10 000,
(b) from 0.2 to 20 mol% of organosiloxy units comprising aliphatically unsaturated groups, and
(c) a low-segregation distribution of the organosiloxy units comprising aliphatically unsaturated groups, with the proviso that the block number R is $\geq 180 \cdot X_a \cdot (1 - X_a)$, where $X_a$ is the mole fraction of these organosiloxy units.

**2.** Crosslinkable silicone rubber compositions according to claim 1, **characterized in that** the polydiorganosiloxane (A) contains a proportion of from 0.4 to 10 mol% of organosiloxy units having aliphatically unsaturated groups.

3. Crosslinkable silicone rubber compositions according to claim 1 or 2, **characterized in that** the filler (B) has been surface-treated.

4. Crosslinkable silicone rubber compositions according to any of claims 1 to 3, **characterized in that** the filler (B) is a surface-treated silica comprising from 0.01 to 2% by weight of Si-bonded, aliphatically unsaturated groups.

5. Crosslinkable silicone rubber compositions according to any of claims 1 to 4, **characterized in that** the crosslinker (C) is selected from the group consisting of free-radically crosslinking compounds (C1) and addition-crosslinking compounds (C2).

6. Crosslinkable silicone rubber compositions according to any of claims 1 to 5, **characterized in that** the crosslinker (C1) is present in an amount of from 0.1 to 5.0% by weight and is an organic peroxide or a mixture of organic peroxides.

7. Silicone elastomers obtained by crosslinking the silicone rubber compositions according to any of claims 1 to 6.

8. Process for producing silicone elastomers according to claim 7, **characterized in that** the silicone rubber composition according to any of claims 1 to 6 is crosslinked at elevated temperature and atmospheric pressure or under superatmospheric pressure.

9. Process for producing silicone elastomers according to claim 8, **characterized in that** the silicone elastomer is heat treated at elevated temperature after crosslinking.

10. Use of the silicone elastomers according to claim 7 in applications subjected to high, long-term dynamic mechanical stresses.

## Revendications

1. Masses réticulables de caoutchouc de silicone, contenant

(A) 100 parties en poids d'au moins un polydiorganosiloxane, qui présente des unités organosiloxy avec des groupements aliphatiquement insaturés, liés par Si-C,
(B) 1-90 parties en poids d'au moins une charge renforçante qui se trouve sous forme d'un solide inorganique finement divisé avec une surface spécifique d'au moins 30 m$^2$/g,
(C) 0,1-20 parties en poids d'au moins un réticulant,
(D) 0-10 parties en poids d'un polydiorganosiloxane terminé aux deux extrémités par vinyldiorganosiloxy, dont les unités de la chaîne sont exemptes de groupes aliphatiquement insaturés, avec un degré de polymérisation moyen entre 3 000 et 10 000,
(E) 0-200 parties en poids d'autres constituants choisis dans le groupe contenant les charges non renforçantes, le talc, la farine de quartz, les inhibiteurs, les catalyseurs, les plastifiants, les pigments colorés, les stabilisateurs, les additifs retardateurs de flamme, les promoteurs d'adhérence, les additifs de démoulage, les microbilles creuses ou leurs mélanges,

**caractérisées en ce que** le polydiorganosiloxane (A) présente

(a) un degré de polymérisation moyen entre 3 000 et 10 000,
(b) 0,2 à 20% en mole d'unités organosiloxy, contenant des groupements aliphatiquement insaturés, et
(c) une répartition pauvre en ségrégation des unités organosiloxy contenant des groupements aliphatiquement insaturés, à condition que le nombre de blocs R $\geq$ 180·$x_a$·(1-$x_a$), où $X_a$ signifie la fraction molaire de ces unités organosiloxy.

2. Masses réticulables de caoutchouc de silicone selon la revendication 1, **caractérisées en ce que** le polydiorganosiloxane (A) contient une proportion de 0,4 à 10% en mole d'unités organosiloxy, présentant des groupements aliphatiquement insaturés.

3. Masses réticulables de caoutchouc de silicone selon la revendication 1 ou 2, **caractérisées en ce que** la charge (B) est traitée en surface.

4. Masses réticulables de caoutchouc de silicone selon l'une quelconque des revendications 1 à 3, **caractérisées en ce que** la charge (B) est une silice à surface traitée, présentant 0,01 à 2% en poids de groupements aliphatiquement insaturés liés par Si.

5. Masses réticulables de caoutchouc de silicone selon l'une quelconque des revendications 1 à 4, **caractérisées en ce que** le réticulant (C) est choisi dans le groupe contenant des composés réticulant par voie radicalaire (C1) et réticulant par addition (C2).

6. Masses réticulables de caoutchouc de silicone selon l'une quelconque des revendications 1 à 5, **caractérisées en ce que** le réticulant (Cl) est contenu à raison de 0,1 à 5,0% en poids et représente un peroxyde organique ou un mélange de peroxydes organiques.

7. Elastomères de silicone, obtenus par réticulation des masses de caoutchouc de silicone selon l'une quelconque des revendications 1 à 6.

8. Procédé pour la préparation d'élastomères de silicone selon la revendication 7, **caractérisé en ce que** la masse de caoutchouc de silicone selon l'une quelconque des revendications 1 à 6 est réticulée à température élevée sans pression ou sous pression élevée.

9. Procédé pour la préparation d'élastomères de silicone selon la revendication 8, **caractérisé en ce que** l'élastomère de silicone est traité thermiquement à température élevée après la réticulation.

10. Utilisation des élastomères de silicone selon la revendication 7 pour une mise en oeuvre dans des domaines avec des sollicitations dynamiques-mécaniques élevées, durables.